# EUROPÄISCHE PATENTSCHRIFT

(11) **EP 3 444 542 B1**
(45) Veröffentlichungstag und Bekanntmachung des Hinweises auf die Patenterteilung: **22.07.2020**
(21) Anmeldenummer: 18187920.6
(22) Anmeldetag: 08.08.2018
(51) Int. Cl.: F25B 5/04, F25B 6/02, F25B 6/04, F25B 9/00, F25B 25/00, F25B 29/00, F25B 30/02, B60H 1/00

(54) **KREISLAUFSYSTEM FÜR EIN FAHRZEUG UND VERFAHREN DAZU**
CIRCULATION SYSTEM FOR A VEHICLE AND METHOD FOR SAME
SYSTÈME DE CIRCULATION POUR UN VÉHICULE ET PROCÉDÉ ASSOCIÉ

(30) Priorität: 13.08.2017 DE 102017118425
(43) Veröffentlichungstag der Anmeldung: 20.02.2019
(73) Patentinhaber: Konvekta Aktiengesellschaft, 34613 Schwalmstadt (DE)
(72) Erfinder: Sonnekalb, Michael, 34613 Schwalmstadt (DE); Fink, Sebastian, 34628 Willingshausen (DE)
(74) Vertreter: Lindinger, Bernhard

(56) Entgegenhaltungen:
- WO-A1-2018/024359
- FR-A1- 3 022 852
- JP-A- 2017 110 898
- US-A1- 2014 102 126
- US-A1- 2016 361 974

## Beschreibung

### Gebiet der Technik:

Die Erfindung betrifft ein Kreislaufsystem für ein Fahrzeug, zumindest umfassend einen ein erstes Fluid führenden ersten Kreislauf, bei dem in vorgesehener Strömungsrichtung des ersten Fluides wenigstens ein Verdichter, wenigstens ein Wärmetauscher als Kondensator oder Gaskühler, wenigstens ein Expansionsorgan und wenigstens ein weiterer Wärmetauscher als Verdampfer angeordnet sind, und einen ein zweites Fluid führenden zweiten Kreislauf, in dem wenigsten eine Fördereinrichtung für das zweite Fluid angeordnet ist, wobei in vorgesehener Strömungsrichtung des ersten Fluides nach dem wenigstens einen Verdichter und vor dem wenigstens einen Expansionsorgan zumindest ein erster Wärmetauscher angeordnet ist, dem das erste Fluid zuführbar ist, um eine Wärmetauschverbindung mit dem zweiten Kreislauf zu realisieren. Die Erfindung betrifft auch ein Fahrzeug damit sowie ein Verfahren zum Betrieb eines solchen Kreislaufsystems. Insbesondere für Fahrzeuge für Straße oder Schiene mit Elektroantriebsmotor wie reine Elektrofahrzeuge oder Hybridfahrzeuge, so zum Beispiel mit Brennstoffzelle und Traktionsbatterie, wird ein derartiges Kreislaufsystem eingesetzt.

### Stand der Technik:

Bekannt ist in DE 20 2007 011 617 U1 ein Kreislaufsystem für ein Fahrzeug mit zwei jeweils ein eigenes Fluid führenden Kreisläufen, wobei ein Wärmetauscher eine Wärmetauschverbindung zwischen den beiden Fluiden realisiert. Dabei ist der erste Kreislauf mit einem überkritisch betreibbaren ersten Fluid beaufschlagt, das mit einem Verdichter verdichtet und mit einer nachgeschalteten Expansionseinrichtung wieder entspannt werden kann. Jedoch erfolgt dabei die Wärmeübertragung vom Wärmetauscher auf des zweite Fluid im zweiten Kreislauf nicht im klassischen Wärmepumpenbetrieb, so dass nicht über Wärmetauscher von außen aufgenommene Wärme vom ersten Fluid in das zweite Fluid gepumpt wird. Ferner ist bei zu viel an das zweite Fluid übertragener Wärme der mit einer Temperierflüssigkeit als zweites Fluid beaufschlagte zweite Kreislauf unzureichend flexibel betreibbar.

In EP 2 660 086 A1 ist ein auch zum Heizen für ein Fahrzeug nutzbares Kreislaufsystem aus dem Gebiet der Technik bekannt, das zwei jeweils ein eigenes Fluid führende Kreisläufen aufweist, wobei ein erster Wärmetauscher eine Wärmetauschverbindung zwischen den beiden Fluiden realisieren kann. Der erste Kreislauf kann zwar beim Heizen im Wärmepumpenbetrieb betrieben werden, aber bei zu viel an das zweite Fluid übertragener Wärme ist der mit einer Temperierflüssigkeit als zweites Fluid beaufschlagte zweite Kreislauf unzureichend flexibel betreibbar. Der Radiator ist dort lediglich zur Motorkühlung alternativ zum übrigen zweiten Kreislauf dem zweiten Kreislauf zuschaltbar und bildet dann mit dem mit dem Motor in Wirkverbindung stehenden Temperierflüssigkeitsstrang einen eigenen gegenläufigen quasi Minikühlkreislauf, in den der erste Wärmetauscher nicht eingebunden ist. Folglich kann dabei nachteilig kein Wärmeaustausch mit dem ersten Fluid des ersten Kreislaufs stattfinden.

In US 2014/102126 A1 ist ein auch zum Heizen für ein Fahrzeug nutzbares Kreislaufsystem bekannt, das zwei jeweils ein eigenes Fluid führende Kreisläufe aufweist, wobei ein erster Wärmetauscher eine Wärmetauschverbindung zwischen den beiden Fluiden realisiert. Der erste Kreislauf ist dort ein Kältemittelkreislauf mit Verdichter, Kondensator oder Gaskühler, Expansionsorgan und zwei Verdampfern und der zweite Kreislauf führt ein mit einer Pumpe gepumptes Wärmeträgerfluid und ist in zumindest zwei Kreislaufmodi schaltbar. Es wird im ersten Wärmetauscher Wärme vom komprimierten Kältemittel auf das Wärmeträgerfluid übertragen. Im ersten Kreislaufmodus des in US 2014/102126 A1 offenbarten Kreislaufsystems wird Luft für beispielsweise den Fahrgastbereich des Fahrzeugs durch einen Innenverdampfer des ersten Kreislaufs gekühlt und Wärmeträgerfluid des zweiten Kreislaufs durch einen Außenwärmetauscher gepumpt. Dabei ist der Innenverdampfer auf eine Position im entsprechenden Luftstrom der zu kühlenden Luft festgelegt. Im zweiten Kreislaufmodus wird hingegen bei dem in US 2014/102126 A1 offenbarten Kreislaufsystem Luft für beispielsweise den Fahrgastbereich des Fahrzeugs durch einen Heizwärmetauscher des zweiten Kreislaufs geheizt und Kältemittel des ersten Kreislaufs statt durch den Innenverdampfer durch einen Außenverdampfer geleitet. Dabei nimmt das Wärmeträgerfluid im zweiten Kreislauf lediglich Wärme über den ersten Wärmetauscher vom komprimierten Kältemittel auf.

Der Erfindung liegt daher die erste Aufgabe zugrunde, ein verbessertes Kreislaufsystem, insbesondere zum Heizen, für ein Fahrzeug, zumindest umfassend zwei jeweils ein Fluid führende Kreisläufe, wobei ein erster Wärmetauscher eine Wärmetauschverbindung zwischen den beiden Fluiden realisieren kann, bereitzustellen. Eine zweite entsprechende Aufgabe bezieht sich auf die Bereitstellung eines Fahrzeugs mit einem derart verbesserten Kreislaufsystem. Eine dritte Aufgabe ist die Bereitstellung eines verbesserten Verfahrens zum Betrieb eines derartigen Kreislausystems.

### Zusammenfassung der Erfindung:

Die erste Aufgabe wird durch ein Kreislaufsystem gemäß den Merkmalen des Anspruchs 1 gelöst. Dadurch, dass das Kreislaufsystem für ein Fahrzeug zumindest einen ein erstes Fluid führenden ersten Kreislauf, bei dem in vorgesehener Strömungsrichtung des ersten Fluides wenigstens ein Verdichter, wenigstens ein Wärmetauscher als Kondensator oder Gaskühler, wenigstens ein Expansionsorgan und wenigstens ein weiterer Wärmetauscher als Verdampfer angeordnet sind, und einen ein zweites Fluid führenden zweiten Kreislauf, in dem wenigsten eine Fördereinrichtung für das zweite Fluid angeordnet ist, umfasst und wobei in vorgesehener Strömungsrichtung des ersten Fluides nach dem wenigstens einen Verdichter und vor dem wenigstens einen Expansionsorgan zumindest ein erster Wärmetauscher angeordnet ist, dem das erste Fluid zuführbar ist, um eine Wärmetauschverbindung mit dem zweiten Kreislauf zu realisieren, und wobei mindestens zwei Kreislaufmodi für den zweiten Kreislauf mit einer vom Kreislaufsystem umfassten Schalteinrichtung schaltbar sind, wobei im ersten Kreislaufmodus dem zweiten Kreislauf neben der wenigstens einen Fördereinrichtung für das zweite Fluid und dem einen ersten Wärmetauscher zumindest ein vom zweiten Fluid durchströmbarer vorzugsweise als Radiator ausgebildeter Außenwärmetauscher derart zugeschaltet ist, dass das zweite Fluid bis auf die Fördereinrichtung, den ersten Wärmetauscher und den zumindest einen Außenwärmetauscher keinen weiterer Wärmetauscher, keinen Konvektor und keine das zweite Fluid zusätzlich heizbare Heizeinrichtung durchströmt, und im zweiten Kreislaufmodus dieser zumindest eine Außenwärmetauscher dem wenigsten die Fördereinrichtung enthaltenden und den ersten Wärmetauscher mit enthaltenden zweiten Kreislauf, der vorzugsweise dabei ein Heizkreislauf ist, nicht zugeschaltet ist, und wobei das Kreislaufsystem für ein Fahrzeug einen ein drittes Fluid führenden dritten Kreislauf, vorzugsweise einen Kühlkreislauf, umfasst, und dem zweiten Kreislauf im zweiten Kreislaufmodus mindestens eine das zweite Fluid zusätzlich heizbare Heizeinrichtung zugeschaltet oder zuschaltbar ist, und in vorgesehener Strömungsrichtung des ersten Fluides im ersten Kreislauf nach dem wenigstens einen Expansionsorgan und vor dem wenigstens einen Verdichter zumindest ein weiterer Wärmetauscher angeordnet ist, dem das erste Fluid zuführbar ist, um eine Wärmetauschverbindung mit dem dritten Kreislauf zu realisieren, wird die erste Aufgabe gelöst.

Eine das zweite Fluid zusätzlich heizbare Heizeinrichtung ist beispielsweise ein elektrisch betriebener Durchflussheizer. Dadurch ist das zweite Fluid zusätzlich erwärmbar, was die Heizleistung des zweiten Kreislaufs erhöht und flexibler gestaltet. Ferner kann damit das zweite Fluid vorgeheizt werden und der Gefahr des Einfrierens des zweiten Fluides entgegengewirkt werden.

Der zweite Kreislauf ist im ersten Kreislaufmodus quasi ein Minikreislauf, bei dem besonders effektiv vom ersten Fluid auf das zweite Fluid im ersten Wärmetauscher übertragene Wärme im zumindest einen Außenwärmetauscher vom zweiten Fluid an die Luft nach außen abgegeben werden kann, ohne dass der Fahrzeuginnenraum vom zweiten Fluid geheizt wird. Der zweite Kreislauf dient dabei vorteilhaft im ersten Kreislaufmodus nur zur indirekten Wärmeableitung aus dem ersten Fluid des ersten Kreislaufs. Mit einer derartigen Zuschaltung des Außenwärmetauschers im zweiten Kreislauf wird die Kühlwirkung auf das erste Fluid und damit die des ersten Kreislaufs vorteilhaft erhöht.

Es ist vorteilhaft der zweite Kreislauf mit dem dritten Kreislauf über den ersten Kreislauf derart koppelbar, dass das zweite Fluid dem ersten Fluid im ersten Wärmetauscher Wärme entziehen kann und damit die Kühlleistung im als Kältemittelkreislauf betriebenen ersten Kreislauf auf Seiten des besagten weiteren Wärmetauschers erhöht, so dass dort das dritte Fluid im dritten Kreislauf besser kühlbar ist. Insbesondere bei geschaltetem ersten Kreislaufmodus des zweiten Kreislaufs ist der erste Wärmetauscher so vorteilhaft als Kondensator oder Gaskühler im ersten Kreislauf bei Kühlbetrieb des dritten Kreislaufs einsetzbar.

Ein Außenwärmetauscher ist derart ausgeführt, dass damit Wärme vom zweiten Fluid direkt mit der Luft nach außen austauschbar ist, wie beispielsweise bei einem als Radiator ausgebildeten und geeignet im, am oder auf dem jeweiligen Fahrzeug positionierbaren Wärmetauscher.

Bei einem erfindungsgemäßen Kreislaufsystem ist bei geschaltetem ersten Kreislaufmodus überschüssige Wärme aus dem zweiten Fluid über den zumindest einen Außenwärmetauscher nach außen abführbar, was eine höhere Flexibilität der Wärmeregulierung für das Fahrzeug ermöglicht. Ferner kann vorteilhaft dadurch, sofern der erste Kreislaufs für das Fahrzeug zum Kühlen betrieben wird, die Wirkung des zumindest einen ersten Wärmetauschers als Gaskühler oder Kondensator für das erste Fluid gesteigert werden, was eine höhere Kühlleistung ermöglicht. Andererseits ist bei geschaltetem zweiten Kreislaufmodus der zweite Kreislauf als üblicher Heizkreislauf mit Wärmeübertragung im ersten Wärmetauscher vom ersten Fluid auf das zweite Fluid betreibbar. Als vorteilhafter Nebeneffekt braucht durch die Schaltung zwischen den beiden Kreislaufmodi die Förderreinrichtung im zweiten Kreislauf weniger geschaltet beziehungsweise reguliert zu werden.

In den Unteransprüchen sind vorteilhafte Ausgestaltungen, Weiterbildungen und Verbesserungen des jeweiligen Gegenstandes der Erfindung angegeben.

Gemäß einer vorteilhaften Ausgestaltung des vorliegenden erfindungsgemäßen Kreislaufsystems ist der erste Kreislauf derart ausgebildet, dass darin ein überkritisch betreibbares Fluid als erstes Fluid überkritisch betreibbar ist. Bei einem solchen mit hohem Innendruck betriebenen Kreislauf befindet sich das Fluid auf der Hochdruckseite im überkritischen Zustand, so dass der das Fluid kühlende Wärmetauscher mangels Kondensation einen Gaskühler darstellt. Zwar sind überkritisch arbeitende Anordnungen zum Klimatisieren eines Fahrzeugs beispielsweise aus EP 0424 474 B1 und DE 44 32 272 C2 bekannt, aber nicht für Kreislaufsysteme gemäß den Merkmalen des Anspruchs 1. Die für einen überkritisch betriebenen Kreislauf einsetzbaren Fluide sind deutlich weniger umweltschädlich als die für unterkritischen Betrieb eines Kältemittelkreislaufs gebräuchlichen Kältemittel wie FKWs so insbesondere das übliche R134a. Auch sind bei einem als Wärmepumpe überkritisch betriebenen Kreislauf Fluide einsetzbar, bei denen die Wärmepumpe auch noch bei deutlich tieferen Außentemperaturen bis -20°C einsatzfähig ist. Besonders vorteilhaft ist das im ersten Kreislauf überkritisch betreibbare erste Fluid CO2 (Kohlendioxid), das unter der Kältemittelbezeichnung R744 auf dem Markt ist. CO2 ist im Vergleich zu Kältemitteln, die unterkritisch betrieben werden, nur sehr wenig umweltschädlich, kann bei tiefen Außentemperaturen bis -20°C im Wärmepumpenbetrieb verwendet und einfach sowie günstig beschafft werden.

Gemäß einer weiteren vorteilhaften Ausgestaltung des erfindungsgemäßen Kreislaufsystems ist das zweite Fluid Wasser. Dieses ist als Temperierflüssigkeit im zweiten Kreislauf insbesondere beim Betrieb als Heizkreislauf ein günstig zu beschaffendes Fluid mit bekanntlich guter Wärmekapazität und ist einfach sowie relativ ungefährlich zu handhaben.

Gemäß einer vorteilhaften Weiterbildung des vorliegenden Kreislaufsystems ist im ersten Kreislauf in vorgesehener Strömungsrichtung des ersten Fluides nach dem wenigstens einen Verdichter und vor dem wenigstens einen Expansionsorgan ein als Fluid-/Luftwärmetauscher ausgebildeter und als Kondensator oder Gaskühler betreibbarer weiterer Wärmetauscher angeordnet. Damit ist nicht nur der erste Wärmetauscher im ersten Kreislauf als Kondensator oder Gaskühler zum Kühlen des ersten Fluides einsetzbar. Mit dem weiteren als Kondensator oder Gaskühler einsetzbaren Wärmetauscher lässt sich das erste Fluid kühlen, so dass die Kühlleistung damit insgesamt erhöht wird und besser regulierbar ist und auch der im ersten Wärmetauscher erfolgende Wärmeaustausch vom ersten Fluid auf das zweite Fluid flexibler regulierbar ist. Ferner ist, wenn der erste Wärmetauscher durch einen geschalteten Bypass vom Kältemittelfluss des ersten Fluides abgekoppelt ist, eine Kühlung des ersten Fluides in dem weiteren Wärmetauscher des ersten Kreislaufs weiterhin zu realisieren.

Gemäß einer weiteren vorteilhaften Weiterbildung des vorliegenden erfindungsgemäßen Kreislaufsystems ist im zweiten Kreislauf zumindest im zweiten Kreislaufmodus mindestens ein vom zweiten Fluid durchströmbarer Konvektor und/oder Wärmetauscher zum Heizen des Fahrzeuginnenraums zugeschaltet oder zuschaltbar. Dadurch ist zumindest im zweiten Kreislaufmodus der zweite Kreislauf besonders geeignet als Heizkreislauf zum Heizen des Fahrzeuginnenraums einsetzbar.

Außerdem ist eine vorteilhafte kombinierende Anordnung des Kreislaufsystems realisierbar, bei der der wenigstens eine Außenwärmetauscher zwischen besagter Parallel- und Reihenanordnung mit einer Schalteinrichtung wie beispielsweise über ein Dreiwegeventil umschaltbar ist. Dieses erlaubt die Vorzüge beider Anordnungen des zumindest einen Außenwärmetauschers im ersten Kreislaufmodus des zweiten Kreislaufs. Die Schalteinrichtung zum Schalten zwischen dem ersten und zweiten Kreislaufmodus des zweiten Kreislaufs umfasst vorzugsweise ein Dreiwegeventil. Ein solches Ventil ermöglicht eine einfache und gut regelbare Schaltung der beiden Kreislaufmodi. Die Schalteinrichtung umfasst vorzugsweise eine Regelung in Abhängigkeit der Lufttemperatur des Fahrzeuginnenraums. Über die Signale von ein oder mehreren Temperatursensoren und dem Abgleich mit der für den Fahrzeuginnerraum vorgegebenen Lufttemperatur ist eine solche Regelung automatisch möglich. Damit lässt sich vorteilhaft bei zu hoher Temperatur im Fahrzeuginnenraum der erste Kreislaufmodus einschalten und bei zu niedriger Temperatur der zweite Kreislaufmodus einschalten.

Besonders vorteilhaft ist das erfindungsgemäße Kreislaufsystem für einen mit Elektroantriebsmotor versehenen Omnibus ausgebildet. Bei einem solchen Omnibus reicht die Motorwärme oft nicht zum Heizen des Fahrzeuginnenraums aus. Das erfindungsgemäße Kreislaufsystem ist ein energiesparendes, wirkungsvolles und flexibel betreibbares System zum Heizen, Kühlen und Klimatisieren eines derartigen Omnibusses.

Schließlich können die Merkmale der Unteransprüche im Wesentlichen frei miteinander und nicht durch die in den Ansprüchen vorliegende Reihenfolge festgelegt kombiniert werden, sofern sie unabhängig voneinander sind.

Die zweite Aufgabe wird durch ein Fahrzeug mit einem erfindungsgemäßen Kreislaufsystem gelöst. Hinsichtlich der Vorteile sowie der weiteren vorteilhaften Ausführungsformen und Weiterbildungen wird auf die obigen Ausführungen zum erfinderungemäßen Kreislaufsystem entsprechend verwiesen. Vorzugsweise ist ein derartiges Fahrzeug mit einem solchen erfindungsgemäßen Kreislaufsystem ein mit Elektroantriebsmotor versehener Omnibus.

Die dritte Aufgabe wird durch ein Verfahren zum Betrieb des erfindungsgemäßen Kreislaufsystems, wobei dieses bei Bedarf an einer Erhöhung der Kühlleistung des ersten Kreislaufs den Verfahrensschritt der Schaltung des ersten Kreislaufmodus des zweiten Kreislaufs umfasst.

Dadurch dass im ersten Kreislaufmodus des zweiten Kreislaufs der wenigstens eine Außenwärmetauscher dem zweiten Kreislauf zugeschaltet ist, wird dort Wärme an die Luft nach außen aus dem zweiten Fluid abgegeben, wodurch im ersten Wärmetauscher an das zweite Fluid vom ersten Fluid mehr Wärme abgegeben werden kann, was dann im ersten Kreislauf auf der Niedrigdruckseite, also nach dem wenigstens einen Expansionsorgan und vor dem wenigstens einen Verdichter, eine erhöhte Kühlleistung zur Folge hat. Insbesondere bei dort durch einen weiteren Wärmetauscher an den ersten Kreislauf in Wärmetauschverbindung stehenden ein drittes Fluid führenden dritten Kreislauf wird dadurch auch die Kühlleistung des dritten Kreislaufs zur beispielsweise Kühlung der Luft für einen Bereich des Fahrzeuginnenraums erhöht.

### Kurze Beschreibung der Zeichnungen:

Anhand der Zeichnungen werden Ausführungsbeispiele der Erfindung erläutert.

Es zeigen
Figur 1 als Prinzipschaltbild eine Ausführungsform des erfindungsgemäßen Kreislaufsystems für ein Fahrzeug im ersten Kreislaufmodus des zweiten Kreislaufs,
Figur 2 als Prinzipschaltbild die in Figur 1 gezeigte Ausführungsform des erfindungsgemäßen Kreislaufsystems für ein Fahrzeug im zweiten Kreislaufmodus des zweiten Kreislaufs, und
Figur 3 als Prinzipschaltbild eine weitere nicht erfindungsgemäße Ausführungsform des Kreislaufsystems für ein Fahrzeug.

### Ausführliche Beschreibung der Erfindung:

Alle Zeichnungen sind schematisch zu verstehen. Auf maßstabsgetreue Abbildungen wurde zum Zwecke erhöhter Klarheit der Darstellung verzichtet.

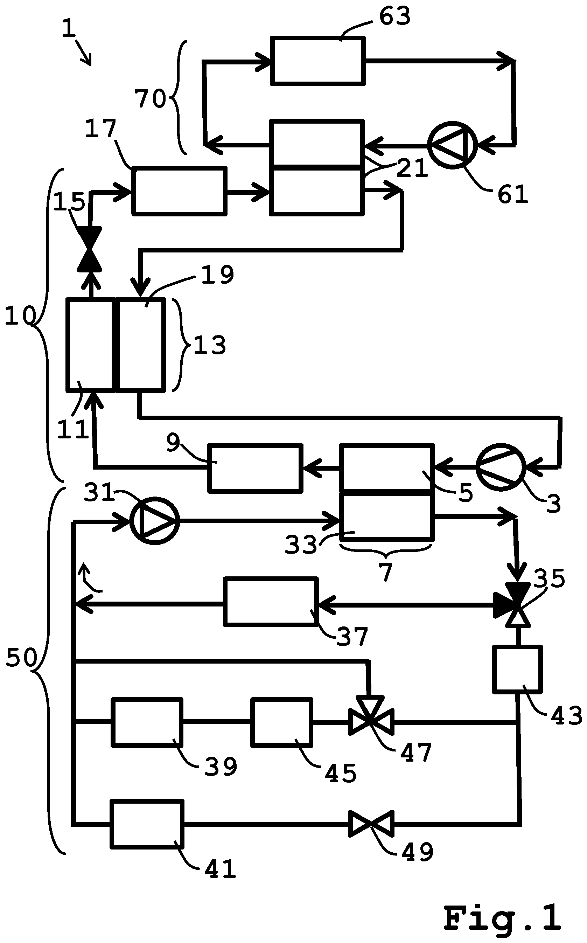

In Figur 1 ist als Prinzipschaltbild eine Ausführungsform des erfindungsgemäßen Kreislaufsystems 1 für ein Fahrzeug im ersten Kreislaufmodus des zweiten Kreislaufs 50 gezeigt. Der erste Kreislauf 10 enthält ein erstes Fluid, das im ersten Kreislauf 10 geführt wird. In diesem Ausführungsbeispiel ist der erste Kreislauf 10 so druckfest ausgestaltet und dessen Komponenten derart ausgebildet, dass das erste Fluid darin im überkritischen Bereich betrieben werden kann. Das erste Fluid ist CO2 (Kohlendioxid). Es sind auch andere für den überkritischen Betrieb geeignete Kältemittel als erstes Fluid denkbar. In vorgesehener Strömungsrichtung des ersten Fluides sind im ersten Kreislauf 10 über Kältemittelleitungen verbundene insbesondere die folgenden für den überkritischen Betrieb geeigneten Komponenten eines Wärmepumpenkreislaufs eingebunden:
Ein Verdichter 3, die erste Seite 5 des ersten Wärmetauschers 7, ein weiterer als Gaskühler zum Wärmeaustausch mit der Luft nach außen als Fluid-/Luftwärmetauscher ausgebildeter Wärmetauscher 9, die Hochdruckseite 11 eines als Innenwärmetauscher ausgebildeten Wärmetauschers 13, ein als Expansionsventil ausgebildetes Expansionsorgan 15, ein als Verdampfer ausgebildeter Wärmetauscher 17, ein weiterer Wärmetauscher 21 und vor Eingang zum Verdichter 3 die Niedrigdruckseite 19 des als Innenwärmetauscher ausgebildeten Wärmetauschers 13.

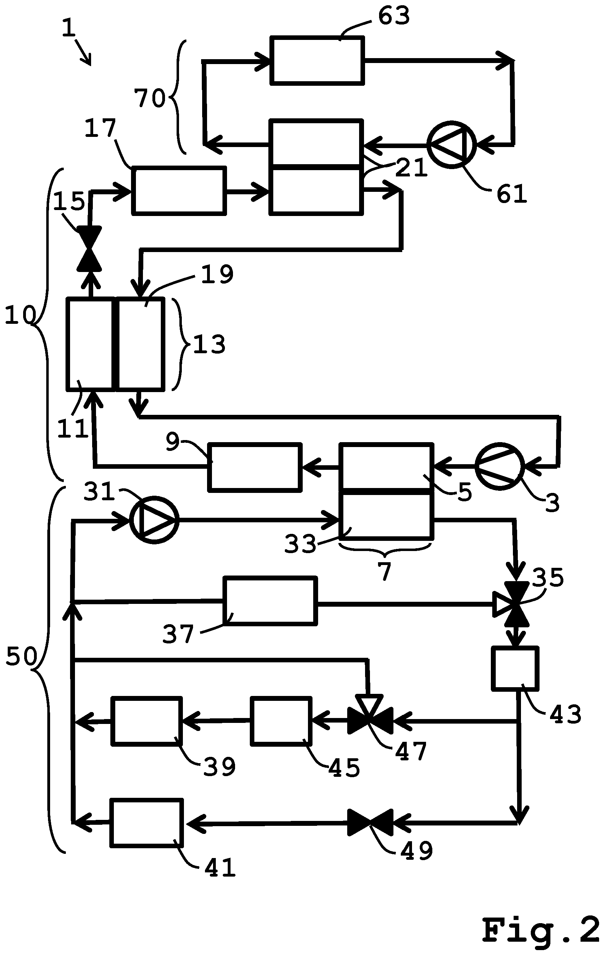

Der zweite Kreislauf 50 ist über den ersten Wärmetauscher 7, der mit seiner ersten Seite 5 in vorgesehener Strömungsrichtung des ersten Fluides nach dem Verdichter 3 und vor dem Expansionsorgan 15 in den ersten Kreislauf 10 eingebunden ist, mit dem ersten Kreislauf 10 wärmetechnisch gekoppelt. Der erste Wärmetauscher 7 ist sowohl mit im ersten Kreislauf 10, nämlich mit seiner ersten Seite 5, enthalten als auch im zweiten Kreislauf 50, nämlich mit seiner zweiten Seite 33, mit enthalten. Der zweite Kreislauf 50 führt ein zweites Fluid, das eine Temperierflüssigkeit ist. Es kommt als zweites Fluid Wasser oder beispielsweise ein Glykol-Wasser-Gemisch in Betracht. Auch andere übliche Temperierflüssigkeiten sind als zweites Fluid denkbar. Von der als Wasserpumpe ausgebildeten Fördereinrichtung 31 kann das zweite Fluid durch die zweite Seite 33 des ersten Wärmetauschers 7 gepumpt werden, um dort Wärme vom durch die erste Seite 5 strömenden ersten Fluid aufzunehmen. Der erste Wärmetauscher 7 ist in diesem Fall als Plattenwärmetauscher ausgeformt. Es sind auch andere bekannte gängige Arten von geeigneten ersten Wärmetauschern 7 für den Wärmeaustausch zwischen dem ersten und zweiten Fluid denkbar. Die Ausführungsvarianten, dass der erste Wärmetauscher 7 im ersten Kreislauf 10 mit einem Bypass samt Ventil für die Durchströmung des ersten Fluides zuschaltbar angeordnet ist, oder dass der erste Wärmetauscher 7 den einzigen Gaskühler oder Kondensator im ersten Kreislauf 10 darstellt, sind auch denkbar. Der zweite Kreislauf 50 verfügt über einen mit einer Schalteinrichtung 35, die in diesem Fall ein Dreiwegeventil umfasst, zuschaltbaren Außenwärmetauscher 37, der hier ein Radiator ist. Denkbar sind auch zwei oder mehr solcher zuschaltbarer Außenwärmetauscher 37. Der Außenwärmetauscher 37 ist in diesem Fall mit der Schalteinrichtung 35 dem zweiten Kreislauf 50 zugeschaltet, so dass der erste Kreislaufmodus des zweiten Kreislaufs 50 geschaltet ist. Der Außenwärmetauscher 37 ist parallel geschaltet, also strömt das durch die Fördereinrichtung 31 und die zweite Seite 33 des ersten Wärmetauschers 7 gepumpte zweite Fluid weiter durch den Außenwärmetauscher 37, bei dem Wärme aus dem zweiten Fluid an die Luft nach außen abgegeben wird, und von dort weiter zur Eingangsseite der Fördereinrichtung 31. Der wenigstens eine Außenwärmetauscher 37 ist im Ausführungsbeispiel dafür vorgesehen, außerhalb des Fahrzeuginnraums positioniert zu werden, beziehungsweise ist der Außenwärmetauscher 37 oder sind die Außenwärmetauscher 37 bei im Fahrzeug eingebautem Kreislaufsystem 1 außerhalb des Fahrzeuginnenraums eingebaut. Schwarz statt weiß markierte Dreiecke eines symbolisierten Ventils zeigen in Figur 1 und Figur 2 die Öffnung des Ventils für die daran angeschlossene Leitung des jeweiligen Fluides. In diesem ersten Kreislaufmodus des zweiten Kreislaufs 50 sind die abgebildeten weiteren Komponenten, wie der zum Heizen der Luft im Fahrzeuginnenraum vorgesehene Wärmetauscher 39, der ebenfalls dazu vorgesehene Konvektor 41 und die das zweite Fluid zusätzlich heizbaren Heizeinrichtungen 43, 45 nicht zugeschaltet, also nicht vom zweiten Fluid durchströmt. Die in Figur 1 und Figur 2 abgebildeten Pfeile geben die Strömungsrichtung des jeweiligen Fluides an.

In vorgesehener Strömungsrichtung des ersten Fluides im ersten Kreislauf 10 nach dem Expansionsorgan 15 und vor dem Verdichter 3 ist ein weiterer Wärmetauscher 21 angeordnet, um eine Wärmetauschverbindung mit einem ein drittes Fluid führenden dritten Kreislauf 70, der ein Kühlkreislauf ist, zu realisieren. Es ist auch eine Ausführung des erfindungsgemäßen Kreislaufsystems 1 denkbar, bei der im ersten Kreislauf 10 vor dem weiteren Wärmetauscher 21 eigens ein Expansionsorgan 15 funktional parallel zum Expansionsorgan 15 vor einem als Verdampfer eingebundenen Wärmetauscher 17 angeordnet ist. Der dritte Kreislauf 70 ist nur sehr vereinfacht mit darin eingebundener Fördereinrichtung 61, weiterem Wärmetauscher 21 und einer beispielsweise zu kühlenden Traktionsbatterie 63 oder anderen zu kühlenden Fahrzeugkomponente dargestellt. Der erste Kreislauf 10 ist also im Wärmepumpenbetrieb betreibbar. Das in Figur 1 abgebildete Kreislaufsystem 1 ist für einen mit Elektromotor versehenen Omnibus ausgebildet. Andere Straßen- oder Schienenfahrzeuge vorzugsweise Elektro- oder Hybridfahrzeuge können ebenso mit einer dazu entsprechend ausgebildeten Ausführungsform des erfindungsgemäßen Kreislaufsystems 1 versehen sein beziehungsweise versehen werden.

Prinzipiell ist ferner eine Ausführung des ersten Kreislaufs 10, bei dem das erste Fluid im unterkritischen Bereich betrieben wird, wie bei einem dafür üblichen Kältemittel aus einem FKW, denkbar.

In Figur 2 ist als Prinzipschaltbild die in Figur 1 gezeigte Ausführungsform des erfindungsgemäßen Kreislaufsystems 1 für ein Fahrzeug im zweiten Kreislaufmodus des zweiten Kreislaufs 50 dargestellt. Hinsichtlich der Beschreibung des ersten Kreislaufs 50 mit seinen Komponenten und des dritten Kreislaufs 70 samt seiner Komponenten wird auf die obige Beschreibung zu Figur 1 verwiesen. Im zweiten Kreislauf 50 ist jedoch die ein Dreiwegeventil umfassende Schalteinrichtung 35 so geschaltet, dass der Außenwärmetauscher 37 dem zweiten Kreislauf 50 nicht zugeschaltet ist, also die Schalteinrichtung 35 die Leitung zum Außenwärmetauscher 37 bezüglich eines Durchströmens des zweite Fluid verschlossen hat. Für das zweite Fluid ist aber die Schalteinrichtung 35 dahingehend geöffnet, dass das zweite Fluid von der Fördereinrichtung 31 durch die zweite Seite 33 des ersten Wärmetauschers 7 weiter durch für solche Heizkreisläufe übliche Leitungen geführt zu einer das zweite Fluid zusätzlich heizbaren Heizeinrichtung 43 strömt. Von dort strömt das zweite Fluid je nach Schaltung der weiteren Ventile 47, 49 entweder direkt zum Eingang der Fördereinrichtung 31 oder erst noch vorher durch den Konvektor 41 im Fahrzeuginnenraum und/oder durch die das zweite Fluid zusätzlich heizbare weitere Heizeinrichtung 45 und den Wärmetauscher 39 zum Heizen des Innenraums des Fahrzeugs. Somit ist der zweite Kreislaufmodus für den zweiten Kreislauf 50 von der Schalteinrichtung 35 geschaltet. Im Wärmetauscher 39 wird aus dem zweiten Fluid Wärme an die Luft des Fahrzeuginnenraums beziehungsweise eines Bereichs des Fahrzeuginnenraums, wie beispielsweise der Bereich des Fahrers des Fahrzeugs, abgegeben. Es sind auch mehrere in den zweiten Kreislauf 50 eingebundene Wärmetauscher 39 zum Wärmeaustausch vom zweiten Fluid an die Innenluft an verschiedenen Stellen des Fahrzeuginnenraums zum Heizen unterschiedlicher Bereiche des Fahrzeuginnenraums denkbar. Dazu sind bekannte Ausgestaltungen mit Ventilschaltungen denkbar, die neben dem/den Konvektor/(en) 41 ein voneinander unabhängige Heizung der einzelnen Bereiche des Fahrzeuginnenraums mit Wärme aus dem zweiten Fluid durch Wärmetauscher 39 ermöglichen. Die zusätzlich heizenden Heizeinrichtungen 43, 45 sind beispielsweise geeignete und dafür bekannte mit Strom von 400 V Wechselspannung betreibbare Durchlauferhitzer beziehungsweise PTC-Heizer.

Das in Figuren 1 und Figur 2 gezeigte Ausführungsbeispiel verfügt optional über eine nicht dargestellte Regelung für die Schalteinrichtung 35 zum Schalten des ersten oder zweiten Kreislaufmodus des zweiten Kreislaufs 50. Diese Regelung umfasst zum Beispiel das automatische Steuern der Schalteinrichtung 35 in Abhängigkeit zur Lufttemperatur des Fahrzeuginnenraums. Erreicht die über in Figur 1 und Figur 2 nicht dargestellte Temperatursensorik gemessene Temperatur der vorher kühleren Innenluft des Fahrzeuginnenraums die vorgegebene Temperatur von beispielsweise 20°C, so erfolgt über die Regelung der Schalteinrichtung 35 das Umschalten vom zweiten Kreislaufmodus auf den ersten Kreislaufmodus des zweiten Kreislaufs 50. Fällt die gemessene Lufttemperatur im Fahrzeuginnenraum jedoch unter einen vorgegeben Wert, wie beispielsweise 19°C, so erfolgt über die Regelung der Schalteinrichtung 35 automatisch das Umschalten vom ersten Kreislaufmodus des zweiten Kreislaufs 50 in den zweiten Kreislaufmodus, so dass also dann der zweite Kreislauf 50 als Heizkreislauf zum Heizen des Fahrzeuginnenraums betrieben wird. Es sind aber auch noch kumulativ oder alternativ andere Parameter, wie zum Beispiel die Außentemperatur oder der Kühlbedarf im dritten Kreislauf 70, denkbar, von denen die Regelung der Schalteinrichtung 35 für die beiden Kreislaufmodi abhängen kann.

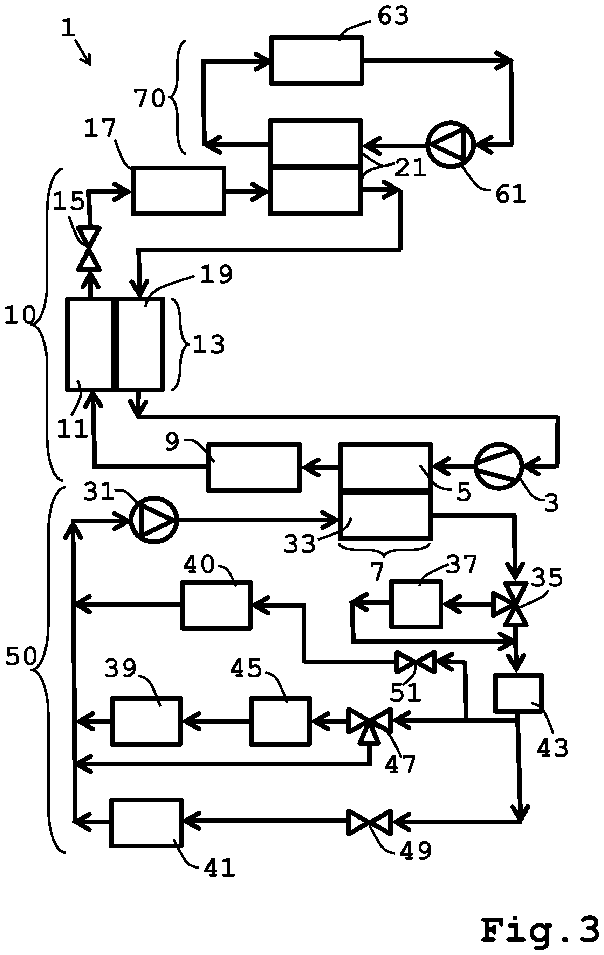

In Figur 3 ist als Prinzipschaltbild eine weitere nicht erfindungsgemäße Ausführungsform des Kreislaufsystems 1 für ein Fahrzeug gezeigt. Der prinzipielle Aufbau für den ersten Kreislauf 10 und den dritten Kreislauf 70 entspricht dem in Figur 1 und Figur 2 dargestellten Ausführungsbeispiel eines Kreislaufsystems 1. Hinsichtlich der Beschreibung des ersten Kreislaufs 10 mit seinen Komponenten samt Bezugszeichen und des dritten Kreislaufs 70 mit seinen Komponenten samt Bezugszeichen wird auf die obige Beschreibung zu Figur 1 und Figur 2 verwiesen.

In den zweiten Kreislauf 50 ist eine Fördereinrichtung 31 und die zweite Seite 33 des ersten Wärmetauschers 7 eingebunden. Die in diesem Fall als Wasserpumpe ausgebildete Fördereinrichtung 31 pumpt das zweite Fluid durch eine Rohrleitung zur sowie weiter durch die zweite Seite 33 des ersten Wärmetauschers 7. Im Wärmetauscher 7 nimmt das zweite Fluid Wärme aus dem durch die erste Seite 5 des Wärmetauschers 7 strömenden ersten Fluid des ersten Kreislaufs 10 auf. Das zweite Fluid ist beispielsweise Wasser. Die in Strömungsrichtung des zweiten Fluides im zweiten Kreislauf 50 der zweiten Seite 33 des ersten Wärmetauschers 7 nachgelagerte Schalteinrichtung 35 gibt je nach Schaltung entweder den Weg des zweiten Fluides weiter zum Außenwärmetauscher 37 frei, so dass der zweite Kreislauf 50 im ersten Kreislaufmodus geschaltet ist, oder gibt den Strömungsweg zum Außenwärmetauscher 37 nicht frei, sondern lässt das zweite Fluid gleich weiter zur das zweite Fluid zusätzlich heizbaren Heizeinrichtung 43 strömen, so dass dann also der zweite Kreislaufmodus beim zweiten Kreislauf 50 geschaltet ist. Im Außenwärmetauscher 37, der als Radiator ausgebildet ist, erfolgt im ersten Kreislaufmodus eine Wärmeabgabe vom im zweiten Kreislauf 50 geführten zweiten Fluid an die Luft nach außen. Der wenigstens eine Außenwärmetauscher 37 ist im Ausführungsbeispiel dafür vorgesehen, außerhalb des Fahrzeuginnraums positioniert zu werden, beziehungsweise ist der Außenwärmetauscher 37 oder sind die Außenwärmetauscher 37 bei im Fahrzeug eingebautem Kreislaufsystem 1 außerhalb des Fahrzeuginnenraums eingebaut. Der Außenwärmetauscher 37 ist im ersten Kreislaufmodus des zweiten Kreislaufs 50 in Reihe geschaltet. Bei geschaltetem ersten Kreislaufmodus durchströmt das zweite Fluid nach dem Außenwärmetauscher 37 die das zweite Fluid zusätzlich heizbare Heizeinrichtung 43. Darauf strömt es entweder, je nach Schaltung der weiteren Ventile 47, 49 und 51, direkt weiter zum Eingang der Fördereinrichtung 31 oder vorher noch durch den Konvektor 41 im Fahrzeuginnenraum und/oder noch durch die das zweite Fluid zusätzlich heizbare Heizeinrichtung 45 und den Wärmetauscher 39 zum Heizen der Luft für einen Fahrzeuginnenraumbereich und/oder noch durch den Wärmetauscher 40 zum Heizen der Luft für einen anderen Fahrzeuginnenraumbereich. Die beiden Fahrzeuginnenraumbereiche sind beispielsweise der Fahrerplatzbereich und der Fahrgastbereich eines Omnibusses. Im zweiten Kreislaufmodus, also ohne zugeschalten Außenwärmetauscher 37, können nach der Heizeinrichtung 43 je nach Schaltung der weiteren Ventile 47, 49 und 51 entsprechend wie im ersten Kreislaufmodus der Konvektor 41, die Heizeinrichtung 45 sowie die Wärmetauscher 39, 40 vom zweiten Fluid vor Erreichen des Eingangs der Fördereinrichtung 31 durchströmt werden. Hinsichtlich der in Figur 3 nicht dargestellten optionalen Regelung der Schalteinrichtung 35, die in diesem Fall, ohne darauf beschränkt zu sein, ein Dreiwegeventil umfasst, wird auf die diesbezüglichen obigen beschreibenden Ausführungen zu Figur 1 und Figur 2 verwiesen.

Denkbar ist auch eine Variante der Ausführung des zweiten Kreislauf 50 des Kreislaufsystems 1, bei der der Außenwärmetauscher 37 im ersten Kreislaufmodus erfindungsgemäß parallel oder nicht erfindungsgemäß in Reihe angeordnet schaltbar ist. Dieses ist beispielsweise nach dem Außenwärmetauscher 37 durch eine zusätzliche mit einem Ventil versehene direkte Rückleitung zum Eingang der Fördereinrichtung 31 im so ergänzten Ausführungsbeispiel von Figur 3 realisierbar.

Das in Figur 3 dargestellte Ausführungsbeispiel ist für einen mit Elektroantriebsmotor versehenen Omnibus ausgebildet beziehungsweise einsetzbar. Andere Straßen- oder Schienenfahrzeuge vorzugsweise Elektro- oder Hybridfahrzeuge können ebenso mit einer dazu entsprechend ausgebildeten Ausführungsform des Kreislaufsystems 1 versehen sein beziehungsweise versehen werden.

Hinsichtlich der in Figuren 1, 2 und 3 abgebildeten Kreislaufsysteme und anderer Ausführungen des erfindungsgemäßen Kreislaufsystems gilt das Folgende: Dadurch dass im ersten Kreislaufmodus des zweiten Kreislaufs 50 der wenigstens eine Außenwärmetauscher 37 dem zweiten Kreislauf 50 zugeschaltet ist, wird dort Wärme an die Luft nach außen aus dem zweiten Fluid abgegeben, wodurch im ersten Wärmetauscher 7 an das zweite Fluid vom ersten Fluid mehr Wärme abgegeben werden kann, was dann im ersten Kreislauf 10 auf der Niedrigdruckseite, also nach dem Expansionsorgan 15 und vor dem Verdichter 3, eine erhöhte Kühlleistung zur Folge hat. Dort besteht durch den weiteren Wärmetauscher 21 eine Wärmetauschverbindung des ersten Fluides des ersten Kreislaufs 10 zum das dritte Fluid führenden dritten Kreislauf 70, so dass dadurch auch die Kühlleistung des dritten Kreislaufs 70 zur Kühlung beispielsweise der Luft für einen Bereich des Fahrzeuginnenraums oder einer Traktionsbatterie 63 erhöht wird. Das Verfahren zum Betrieb des erfindungsgemäßen Kreislaufsystems 1 umfasst also bei Bedarf an einer Erhöhung der Kühlleistung des ersten Kreislaufs 10 und damit auch der des dritten Kreislaufs 70 den Verfahrensschritt der Schaltung des ersten Kreislaufmodus des zweiten Kreislaufs 50.

## Patentansprüche

1. Kreislaufsystem (1) für ein Fahrzeug, zumindest umfassend:
- einen ein erstes Fluid führenden ersten Kreislauf (10), bei dem in vorgesehener Strömungsrichtung des ersten Fluides wenigstens ein Verdichter (3), wenigstens ein Wärmetauscher (7, 9) als Kondensator oder Gaskühler, wenigstens ein Expansionsorgan (15) und wenigstens ein weiterer Wärmetauscher (17, 21) als Verdampfer angeordnet sind, und
- einen ein zweites Fluid führenden zweiten Kreislauf (50), in dem wenigsten eine Fördereinrichtung (31) für das zweite Fluid angeordnet ist,
wobei in vorgesehener Strömungsrichtung des ersten Fluides nach dem wenigstens einen Verdichter (3) und
vor dem wenigstens einen Expansionsorgan (15) zumindest ein erster Wärmetauscher (7) angeordnet ist, dem das erste Fluid zuführbar ist, um eine Wärmetauschverbindung mit dem zweiten Kreislauf (50) zu realisieren, und mindestens zwei Kreislaufmodi für den zweiten Kreislauf (50) mit einer vom Kreislaufsystem (1) umfassten Schalteinrichtung (35) schaltbar sind, wobei im ersten Kreislaufmodus dem zweiten Kreislauf (50) neben der wenigstens einen Fördereinrichtung (31) für das zweite Fluid und dem einen ersten Wärmetauscher (7) zumindest ein vom zweiten Fluid durchströmbarer vorzugsweise als Radiator ausgebildeter Außenwärmetauscher (37) derart zugeschaltet ist, dass das zweite Fluid bis auf die Fördereinrichtung (31), den ersten Wärmetauscher (7) und den zumindest einen Außenwärmetauscher (37) keinen weiterer Wärmetauscher (39, 40), keinen Konvektor (41) und keine das zweite Fluid zusätzlich heizbare Heizeinrichtung (43, 45) durchströmt, und im zweiten Kreislaufmodus dieser zumindest eine Außenwärmetauscher (37) dem wenigsten die Fördereinrichtung (31) enthaltenden und den ersten Wärmetauscher (7) mit enthaltenden zweiten Kreislauf (50), der vorzugsweise dabei ein Heizkreislauf ist, nicht zugeschaltet ist **dadurch gekennzeichnet,**
- **dass** das Kreislaufsystem (1) für ein Fahrzeug einen ein drittes Fluid führenden dritten Kreislauf (70), vorzugsweise einen Kühlkreislauf, umfasst, und
- **dass** dem zweiten Kreislauf (50) im zweiten Kreislaufmodus mindestens eine das zweite Fluid zusätzlich heizbare Heizeinrichtung (43, 45) zugeschaltet oder zuschaltbar ist, und
- **dass** in vorgesehener Strömungsrichtung des ersten Fluides im ersten Kreislauf (10) nach dem wenigstens einen Expansionsorgan (15) und vor dem wenigstens einen Verdichter (3) zumindest ein weiterer Wärmetauscher (21) angeordnet ist, dem das erste Fluid zuführbar ist, um eine Wärmetauschverbindung mit dem dritten Kreislauf (70) zu realisieren.

2. Kreislaufsystem (1) nach Anspruch 1, **dadurch gekennzeichnet dass** der erste Kreislauf (10) derart ausgebildet ist, dass darin ein überkritisch betreibbares Fluid als erstes Fluid überkritisch betreibbar ist.

3. Kreislaufsystem (1) nach Anspruch 2, **dadurch gekennzeichnet dass** das erste Fluid CO2 ist.

4. Kreislaufsystem (1) nach einem der Ansprüche 1 bis 3, **dadurch gekennzeichnet dass** das zweite Fluid Wasser ist.

5. Kreislaufsystem (1) nach einem der Ansprüche 1 bis 4, **dadurch gekennzeichnet, dass** im ersten Kreislauf (10) in vorgesehener Strömungsrichtung des ersten Fluides nach dem wenigstens einen Verdichter (3) und vor dem wenigstens einen Expansionsorgan (15) ein als Fluid-/Luftwärmetauscher ausgebildeter und als Kondensator oder Gaskühler betreibbarer weiterer Wärmetauscher (9) angeordnet ist.

6. Kreislaufsystem (1) nach einem der Ansprüche 1 bis 5, **dadurch gekennzeichnet dass** im zweiten Kreislauf (50) zumindest im zweiten Kreislaufmodus mindestens ein vom zweiten Fluid durchströmbarer Konvektor (41) und/oder Wärmetauscher (39, 40) zum Heizen des Fahrzeuginnenraums zugeschaltet oder zuschaltbar ist.

7. Kreislaufsystem (1) nach einem der Ansprüche 1 bis 6, **dadurch gekennzeichnet dass** die Schalteinrichtung (35) ein Dreiwegeventil umfasst.

8. Kreislaufsystem (1) nach einem der Ansprüche 1 bis 7, **dadurch gekennzeichnet dass** es einen oder mehrerer Temperatursensoren zur Messung der Lufttemperatur des Fahrzeuginnenraums umfasst, und dass die Schalteinrichtung (35) eine Regelung in Abhängigkeit der Lufttemperatur des Fahrzeuginnenraums umfasst.

9. Kreislaufsystem (1) nach einem der Ansprüche 1 bis 8, **dadurch gekennzeichnet, dass** es für einen mit Elektroantriebsmotor versehenen Omnibus ausgebildet ist.

10. Fahrzeug, wie insbesondere ein mit Elektroantriebsmotor versehener Omnibus, mit einem Kreislaufsystem (1) nach einem der Ansprüche 1 bis 9.

11. Verfahren zum Betrieb des Kreislaufsystems (1) nach einem der Ansprüche 1 bis 9, wobei dieses bei Bedarf an einer Erhöhung der Kühlleistung des ersten Kreislaufs (10) den Verfahrensschritt der Schaltung des ersten Kreislaufmodus des zweiten Kreislaufs (50) umfasst.

12. Verfahren nach Anspruch 11 umfassend die Schritte
- ein erstes Fluid durch einen ersten Kreislauf (10) umfassend wenigstens einen Verdichter (3), einen ersten Wärmetauscher (7) als Kondensator oder Gaskühler, ein Expansionsorgan (15) und einen weiteren Wärmetauscher (17, 21) als Verdampfer strömen lassen,
- ein zweites Fluid durch einen zweiten Kreislauf (50) umfassend wenigstens eine Fördereinrichtung (31), den ersten Wärmetauscher (7) und eine Schalteinrichtung (35) strömen lassen, und **dadurch gekennzeichnet, dass**
- die Schalteinrichtung (35) zur Erhöhung der Kühlleistung des ersten Kreislaufs (10) den ersten Kreislaufmodus des zweiten Kreislaufs (50) in Abhängigkeit von der Lufttemperatur des Fahrzeuginnenraums und/oder von der Außentemperatur mit einer Regelung automatisch gesteuert schaltet.

13. Verfahren nach Anspruch 11 oder 12, **gekennzeichnet durch** die weiteren Schritte
- das dritte Fluid **durch** den dritten Kreislauf (70) umfassend den weiteren Wärmetauscher (21) strömen lassen, und
- das erste Fluid im ersten Kreislauf (10) **durch** den weiteren Wärmetauscher (21) strömen lassen.

## Claims

1. Circulation system (1) for a vehicle, at least comprising:
- a first circuit (10) which carries a first fluid and in which at least one compressor (3), at least one heat exchanger (7, 9) as a condenser or gas cooler, at least one expansion element (15) and at least one further heat exchanger (17, 21) as an evaporator are arranged in the intended flow direction of the first fluid, and
- a second circuit (50) which carries a second fluid and in which at least one conveying device (31) for the second fluid is arranged,
wherein at least one first heat exchanger (7) to which the first fluid can be supplied in order to realize a heat exchange connection with the second circuit (50) is arranged downstream of the at least one compressor (3) and upstream of the at least one expansion element (15) in the intended flow direction of the first fluid, and it is possible to switch between at least two circulation modes for the second circuit (50) by way of a switching device (35) which is comprised by the circulation system (1), wherein, in the first circulation mode, at least one external heat exchanger (37), through which the second fluid can flow and which is preferably designed as a radiator, is connected to the second circuit (50) next to the at least one conveying device (31) for the second fluid and to the one first heat exchanger (7) in such a way that the second fluid, apart from the conveying device (31), the first heat exchanger (7) and the at least one external heat exchanger (37), flows through no further heat exchanger (39, 40), no convector (41) and no heating device (43, 45) which can additionally heat the second fluid, and, in the second circulation mode, this at least one external heat exchanger (37) is not connected to the second circuit (50), which contains at least the conveying device (31) and also contains the first heat exchanger (7), which is preferably a heating circuit in this case, **characterized**
- **in that** the circulation system (1) for a vehicle comprises a third circuit (70) which carries a third fluid, preferably a cooling circuit, and
- **in that** at least one heating device (43, 45), which can additionally heat the second fluid, is connected or can be connected to the second circuit (50) in the second circulation mode, and
- **in that** at least one further heat exchanger (21), to which the first fluid can be supplied in order to realize a heat exchange connection with the third circuit (70), is arranged downstream of the at least one expansion element (15) and upstream of the at least one compressor (3) in the intended flow direction of the first fluid in the first circuit (10).

2. Circulation system (1) according to Claim 1, **characterized in that** the first circuit (10) is designed in such a way that a supercritically operable fluid can be supercritically operated as a first fluid in the said first circuit.

3. Circulation system (1) according to Claim 2, **characterized in that** the first fluid is CO₂.

4. Circulation system (1) according to one of Claims 1 to 3, **characterized in that** the second fluid is water.

5. Circulation system (1) according to one of Claims 1 to 4, **characterized in that** a further heat exchanger (9), which is designed as a fluid/air heat exchanger and can be operated as a condenser or gas cooler, is arranged downstream of the at least one compressor (3) and upstream of the at least one expansion element (15) in the intended flow direction of the first fluid in the first circuit (10).

6. Circulation system (1) according to one of Claims 1 to 5, **characterized in that** at least one convector (41), through which the second fluid can flow, and/or heat exchanger (39, 40) for heating the vehicle interior is connected or can be connected in the second circuit (50) at least in the second circulation mode.

7. Circulation system (1) according to one of Claims 1 to 6, **characterized in that** the switching device (35) comprises a three-way valve.

8. Circulation system (1) according to one of Claims 1 to 7, **characterized in that** it comprises one or more temperature sensors for measuring the air temperature of the vehicle interior, and **in that** the switching device (35) comprises regulation depending on the air temperature of the vehicle interior.

9. Circulation system (1) according to one of Claims 1 to 8, **characterized in that** it is designed for a bus which is provided with an electric drive motor.

10. Vehicle, such as a bus provided with an electric drive motor in particular, comprising a circulation system (1) according to one of Claims 1 to 9.

11. Method for operating the circulation system (1) according to one of Claims 1 to 9, wherein the said method comprises the method step of switching the first circulation mode of the second circuit (50) when an increase in the cooling capacity of the first circuit (10) is required.

12. Method according to Claim 11, comprising the steps of
- allowing a first fluid to flow through a first circuit (10) comprising at least one compressor (3), one first heat exchanger (7) as a condenser or gas cooler, one expansion element (15) and one further heat exchanger (17, 21) as an evaporator,
- allowing a second fluid to flow through a second circuit (50) comprising at least one conveying device (31), the first heat exchanger (7) and a switching device (35), and **characterized in that**
- the switching device (35), for increasing the cooling capacity of the first circuit (10), switches the first circulation mode of the second circuit (50) depending on the air temperature of the vehicle interior and/or on the external temperature with regulation in an automatically controlled manner.

13. Method according to Claim 11 or 12, **characterized by** the further steps of
- allowing the third fluid to flow through the third circuit (70) comprising the further heat exchanger (21), and
- allowing the first fluid to flow through the further heat exchanger (21) in the first circuit (10).

## Revendications

1. Système de circulation (1) pour un véhicule, comportant au moins :
- un premier circuit (10) guidant un premier fluide, dans lequel au moins un compresseur (3), au moins un échangeur thermique (7, 9) utilisé comme condenseur ou refroidisseur de gaz, au moins un élément de détente (15) et au moins un autre échangeur thermique (17, 21) utilisé comme évaporateur sont disposés dans le sens d'écoulement prévu du premier fluide, et
- un deuxième circuit (50) guidant un deuxième fluide, dans lequel au moins un dispositif de refoulement (31) pour le deuxième fluide est disposé,
dans lequel au moins un premier échangeur thermique (7) est disposé en aval de l'au moins un compresseur (3) et en amont de l'au moins un élément de détente (15) dans le sens d'écoulement prévu du premier fluide, premier échangeur thermique auquel le premier fluide peut être amené, pour réaliser une liaison d'échange thermique avec le deuxième circuit (50), et au moins deux modes pour le deuxième circuit (50) peuvent être commutés à l'aide d'un dispositif de commutation (35) compris dans le système de circulation (1), dans lequel, dans le premier mode du deuxième circuit (50) en plus de l'au moins un dispositif de refoulement (31) pour le deuxième fluide et du premier échangeur thermique (7), au moins un échangeur thermique extérieur (37) conçu de préférence comme radiateur et pouvant être traversé par le deuxième fluide est connecté de telle sorte que le deuxième fluide ne traverse, à part le dispositif de refoulement (31), le premier échangeur thermique (7) et l'au moins un échangeur thermique extérieur (37), aucun autre échangeur thermique (39, 40), aucun convecteur (41) et aucun dispositif de chauffage (43, 45) pouvant chauffer en plus le deuxième fluide, et dans le deuxième mode de circuit, cet au moins un échangeur thermique extérieur (37) n'est pas connecté au deuxième circuit (50) contenant au moins le dispositif de refoulement (31) et contenant le premier échangeur thermique (7), lequel deuxième circuit est en l'occurrence un circuit de chauffage, **caractérisé**
- **en ce que** le système de circulation (1) pour un véhicule comporte un troisième circuit (70) guidant un troisième fluide, de préférence un circuit de refroidissement, et
- **en ce qu'**au moins un dispositif de chauffage (43, 45) pouvant chauffer en plus le deuxième fluide est ou peut être connecté au deuxième circuit (50) dans le deuxième mode de circuit, et
- **en ce qu'**au moins un autre échangeur thermique (21) est disposé dans le premier circuit (10) en aval de l'au moins un élément de détente (15) et en amont de l'au moins un compresseur (3) dans le sens d'écoulement prévu du premier fluide, autre échangeur thermique auquel le premier fluide peut être amené, pour réaliser une liaison d'échange thermique avec le troisième circuit (70).

2. Système de circulation (1) selon la revendication 1, **caractérisé en ce que** le premier circuit (10) est conçu de telle sorte qu'un fluide à fonctionnement supercritique peut être utilisé de manière supercritique comme premier fluide dans celui-ci.

3. Système de circulation (1) selon la revendication 2, **caractérisé en ce que** le premier fluide est du CO2.

4. Système de circulation (1) selon l'une des revendications 1 à 3, **caractérisé en ce que** le deuxième fluide est de l'eau.

5. Système de circulation (1) selon l'une des revendications 1 à 4, **caractérisé en ce qu'**un autre échangeur thermique (9) conçu comme échangeur thermique fluide-air et pouvant fonctionner comme condenseur ou refroidisseur de gaz est disposé dans le premier circuit (10) en aval de l'au moins un compresseur (3) et en amont de l'au moins un élément de détente (15) dans le sens d'écoulement prévu du premier fluide.

6. Système de circulation (1) selon l'une des revendications 1 à 5, **caractérisé en ce qu'**au moins un convecteur (41) et/ou un échangeur thermique (39, 40) servant au chauffage de l'espace intérieur du véhicule, lesquels peuvent être traversés par le deuxième fluide, sont ou peuvent être connectés dans le deuxième circuit (50) au moins dans le deuxième mode de circuit.

7. Système de circulation (1) selon l'une des revendications 1 à 6, **caractérisé en ce que** le dispositif de commutation (35) comporte un distributeur à trois voies.

8. Système de circulation (1) selon l'une des revendications 1 à 7, **caractérisé en ce qu'**il comporte un ou plusieurs capteurs de température servant à la mesure de la température de l'air de l'espace intérieur du véhicule, et **en ce que** le dispositif de commutation (35) comporte une unité de régulation dépendant de la température de l'air de l'espace intérieur du véhicule.

9. Système de circulation (1) selon l'une des revendications 1 à 8, **caractérisé en ce qu'**il est conçu pour un omnibus muni d'un moteur d'entraînement électrique.

10. Véhicule, tel que notamment un omnibus muni d'un moteur d'entraînement électrique, comprenant un système de circulation (1) selon l'une des revendications 1 à 9.

11. Procédé de fonctionnement du système de circulation (1) selon l'une des revendications 1 à 9, celui-ci comportant, en cas de nécessité d'augmentation de la puissance de refroidissement du premier circuit (10), l'étape de procédé de commutation du premier mode du deuxième circuit (50).

12. Procédé selon la revendication 11, comportant les étapes suivantes
- permettre à un premier fluide de s'écouler à travers un premier circuit (10) comportant au moins un compresseur (3), un premier échangeur thermique (7) utilisé comme condenseur ou refroidisseur de gaz, un élément de détente (15) et un autre échangeur thermique (17, 21) utilisé comme évaporateur,
- permettre à un deuxième fluide de s'écouler à travers un deuxième circuit (50) comportant au moins un dispositif de refoulement (31), le premier échangeur thermique (7) et un dispositif de commutation (35), et **caractérisé en ce que**
- le dispositif de commutation (35) commute, de manière commandée automatiquement par une unité de régulation, le premier mode du deuxième circuit (50) en fonction de la température de l'air de l'espace intérieur du véhicule et/ou de la température extérieure pour l'augmentation de la puissance de refroidissement du premier circuit (10) .

13. Procédé selon la revendication 11 ou 12, **caractérisé par** les autres étapes suivantes
- permettre au troisième fluide de s'écouler à travers le troisième circuit (70) comportant l'autre échangeur thermique (21), et
- permettre au premier fluide dans le premier circuit (10) de s'écouler à travers l'autre échangeur thermique (21).
